# EUROPEAN PATENT APPLICATION

(11) **EP 2 978 196 A1**
(43) Date of publication of application: **27.01.2016**
(21) Application number: 14768970.7
(22) Date of filing: 12.03.2014
(51) Int. Cl.: H04M 1/02, G02F 1/1333, G09F 9/00, H05K 5/02

(54) **PORTABLE INFORMATION APPARATUS**

(30) Priority: 18.03.2013 JP 2013055713
(71) Applicant: Kabushiki Kaisha Toshiba, Inc., Tokyo 105-8001 (JP)
(72) Inventor: MATSUDA, Takuya, Tokyo 105-8001 (JP); MORIMOTO, Jun, Tokyo 105-8001 (JP); SASAKI, Yuji, Tokyo 105-8001 (JP)
(74) Representative: Hoffmann Eitle
(86) International application number: PCT/JP2014/001393
(87) International publication number: WO 2014/148006

(57) **Abstract**

A portable information apparatus of an embodiment includes a display unit having a display portion and a panel, a housing having a front frame and a rear frame, and a mounting substrate arranged in the housing. The display portion has a display surface and a back surface. The panel is arranged on the display surface of the display portion and has a back surface, a display surface and a side surface. The back surface of the panel is formed at a side of the display surface of the display portion. The front frame is formed to surround the side surface of the panel. The front frame is provided with a support portion to support the display unit. The rear frame is arranged at a side of the back surface of the display portion, contacts the front frame, and opposes to the display unit. The rear frame has a first rear frame and a second rear frame, and the first rear frame has rigidity larger than the second rear frame.

## Description

### CROSS REFERENCE TO RELATED APPLICATION

### CROSS REFERENCE TO RELATED APPLICATION

This application is based upon and claims the benefit of priority from the prior Japanese Patent Application No. 2013-055713, filed on March 18, 2013, the entire content of which is incorporated herein by reference.

### TECHNICAL FIELD

Embodiments described herein relate generally to a portable information apparatus.

### BACKGROUND ART

As an example of a portable information apparatus, a portable information apparatus which uses a flexible display panel having a flexibly deformable display panel is known. In such a portable information apparatus, in order to enable bending and using a housing, the rigidity of the housing is lowered.

However, in a case that the rigidity of the housing is lowered, when the housing is bent, a mounting substrate arranged in the housing is also bent, and thus a load is applied to the mounting substrate, and an electronic component arranged on the mounting substrate is likely to be damaged.

### PRIOR ART DOCUMENTS

### PATENT DOCUMENTS

PATENT DOCUMENT 1: Japanese Patent Application Publication No. 2012-128227

### SUMMARY OF THE INVENTION

### PROBLEM TO BE SOLVED BY THE INVENTION

An embodiment of the present invention provides a portable information apparatus capable of reducing a load applied to a mounting substrate more.

### MEANS TO SOLVE THE PROBLEM

A portable information apparatus of an embodiment includes a display unit having a display portion and a panel, a housing having a front frame and a rear frame, and a mounting substrate arranged in the housing. The display portion has a display surface and a back surface formed at a side opposite to the display surface. The panel is arranged on the display surface of the display portion and has a back surface, a display surface and a side surface. The back surface of the panel is formed at a side of the display surface of the display portion. The display surface of the panel is formed at a side opposite to the back surface. The side surface of the panel contacts the back surface of the panel and the display surface of the panel. The front frame is formed to surround the side surface of the panel and provided with a support portion to support the display unit. The rear frame is arranged at a side of the back surface of the display portion, contacts the front frame, and is provided to oppose to the display unit. The rear frame has a first rear frame and a second rear frame, and the first rear frame has rigidity larger than the second rear frame. The mounting substrate is provided on the first rear frame.

### BRIEF DESCRIPTION OF THE DRAWINGS

Fig. 1A is a top view schematically illustrating a portable information apparatus according to an embodiment.
Fig. 1B is a cross-sectional view taken along line A-A of Fig. 1A.
Fig. 1C is a top view taken along line B-B of Fig. 1B.
Fig. 2A is a diagram illustrating a displacement distribution of a rear frame of a portable information apparatus of a comparative example.
Fig. 2B is a diagram illustrating a displacement distribution of a rear frame of the portable information apparatus according to the embodiment.
Fig. 3A is a diagram illustrating a stress distribution of a mounting substrate when the rear frame of the portable information apparatus of a comparative example is used.
Fig. 3B is a diagram illustrating a stress distribution of a mounting substrate when the rear frame of the portable information apparatus according to the embodiment is used.
Fig. 4A is a cross-sectional view schematically illustrating a portable information apparatus according to another embodiment.
Fig. 4B is a top view taken along line C-C of Fig. 4A.
Fig. 5A is a cross-sectional view schematically illustrating a portable information apparatus according to further another embodiment.
Fig. 5B is a top view taken along line D-D of Fig. 5A.

### EMBODIMENTS

Hereinafter, embodiments will be described in detail with reference to the drawings. In the drawings, the same reference numerals denote the same or similar parts. The drawings are schematic or conceptual, and a relation between shapes of respective parts or horizontal and vertical dimensions, a size ratio between parts etc. are not necessarily the same as actual ones. Further, even when the same part is illustrated, a different dimension or a different ratio may be illustrated depending on a drawing.

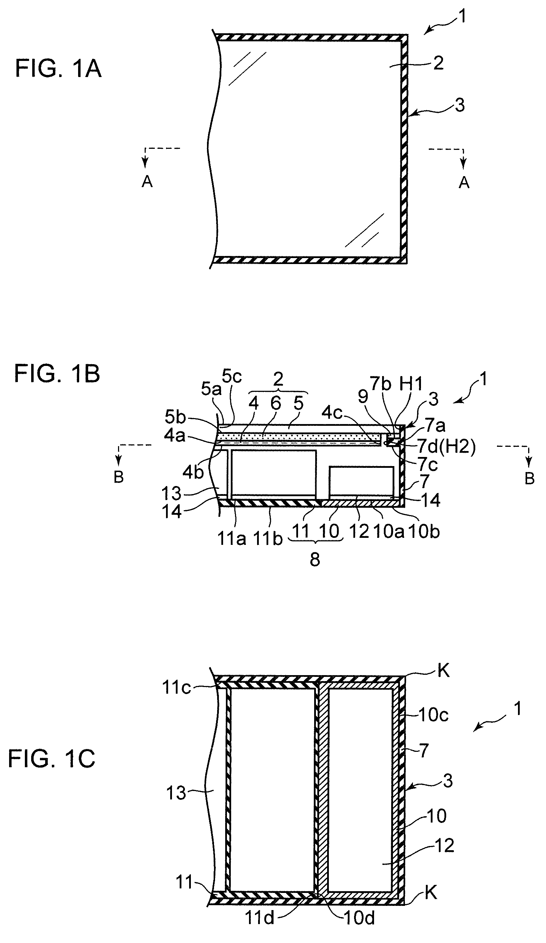

Figs. 1 are schematic views illustrating a portable information apparatus according to an embodiment. Fig. 1A is a top view of a portable information apparatus. Fig. 1B is a cross-sectional view taken along line A-A of Fig. 1A. Fig. 1C is a top view taken along line B-B of Fig. 1B. A portable information apparatus 1 has a display unit 2, a housing 3, a mounting substrate 12, and a plurality of batteries 13. The portable information apparatus 1 is formed in substantially a rectangular parallelepiped shape.

The display unit 2 contacts the housing 3. The display unit 2 has a display portion 4, a panel 5, and a light transmissive member 6.

The display portion 4 projects an image or a video, and has a plurality of pixels. For example, the display portion 4 is a liquid crystal display (LCD) or an organic EL displayed (OLED). The display portion 4 is not limited to these, and various display devices can be used.

The display portion 4 has a rectangular plate shape, and has a display surface 4a, a back surface 4b, and a side surface 4c. The display surface 4a is a surface facing in a direction in which information such as an image or a video is displayed. The back surface 4b is at a position opposite to the display surface 4a, and arranged to be substantially parallel to the display surface 4a. The side surface 4c is a surface positioned on the peripheries of the display surface 4a and the back surface 4b.

For example, the display portion 4 is formed using a resin substrate and formed at a thickness of about 0.2 mm to have flexibility.

The panel 5 is a light transmissive member and arranged on the display surface 4a of the display portion 4. The panel 5 has a size larger than the display portion 4, and the panel 5 converts and protects the display portion 4. The panel 4 has rigidity larger than the display portion 4. The panel 5 overlaps the display surface 4a of the display portion 4 and is fixed.

The light transmissive member 6 is arranged between the display portion 4 and the panel 5, and is an adhesive material to make the display portion 4 adhere to the panel 5. The light transmissive member 6 is formed using a light transmissive one to transmit light of the display portion 4, and arranged at a thickness of about 0.1 mm, for example.

A double-sided tape or an acrylic adhesive material is used as a material of the light transmissive member 6. In the present embodiment, a double-sided tape or an acrylic adhesive material is used, but the material of the light transmissive member 6 is not limited to these. As the light transmissive member 5 is arranged, the display portion 4 is supported by the panel 5.

The panel 5 is a touch panel provided with a touch sensor. Since the panel 5 is the touch panel, for example, when touch panel input information is displayed through the display portion 4, a user can input information or perform an operation by touching the surface of the panel 7.

The panel 5 according to the present embodiment has both a protection panel function and a touch panel function but is not limited to this. For example, when the display portion 4 has a touch panel function, the panel 5 may function as the protection panel.

The panel 5 has a rectangular plate shape, and is formed, for example, using a resin material. The panel 5 is formed at a thickness of about 0.5 mm to have plasticity. The panel 5 has a display surface 5a a back surface 5b, and a side surface 5c. The display surface 5a is a surface facing a direction in which an image or a video is displayed. The back surface 5b is at a position opposite to the display surface 5a, and arranged to be substantially parallel to the display surface 5a. The side surface 5c is a surface positioned on the peripheries of the display surface 5a and the back surface 5b.

The display surface 5a of the panel 5 is the display surface of the display unit 2. The back surface 4b of the display portion 4 is the back surface of the display unit 2. The side surface 4c of the display portion 4 and the side surface 5c of the panel 5 form the side surface of the display unit 5.

The housing 3 has a front frame 7 and a rear frame 8.

The front frame 7 has a first opening H1 passing through the display surface 5a of the panel 5. The front frame 7 is formed to surround the side surface 5c of the panel 5. In other words, the panel 5 is arranged to be contained in the first opening H1. The display surface 5a of the panel 5 is substantially at the same plane as the edge (end surface) of the front frame 7, and contacts the edge (end surface) of the front frame 7.

The front frame 7 extends vertically to the rear frame 8. The front frame 7 extends a thickness direction of the housing 3. In the present embodiment, the front frame 7 extends vertically to the rear frame 8, but the front frame 7 is not limited to this.

The front frame 7 has a support portion 7a. The support portion 7a has a panel support surface 7b supporting the panel 5, a back surface 7c formed to be opposite to the panel support surface 7b and substantially in parallel to the panel support surface 7b, and a side surface 7d contacts edge ends of the panel support surface 7b and the back surface 7c.

The front frame 7 is formed using a material having plasticity such as a resin material. In the present embodiment, a resin material is used, but the present invention is not limited to this, and a metallic material may be used.

The support portion 7a is formed such that the back surface 7c of the front frame 7 is substantially in parallel to the back surface 4b of the display portion 4, and the support portion 7a protrudes inward from the front frame 7. The support portion 7a is formed in an annular shape along the inner side of the front frame 7, and is formed to surround the side surface 4c of the display portion 5. As the support portion 7a is formed as described above, the support portion 7a forms a second opening H2 through the side surface 7d surrounding the side surface 4c of the display portion 4. The second opening H2 is formed to be smaller than the first opening H1.

The support portion 7a is formed such that the support surface 7b is positioned with an interval from the edge (end surface) of the front frame 7, that is, positioned at the same distance as the thickness of the panel 5 or larger downward from the edge (end surface) of the front frame 7. As described above, the support portion 7a supports the back surface 5b of the panel 5 through the panel support surface 7b of the support portion 7a. As the panel 5 is supported through the support portion 7a as described above, the support portion 7a supports the display portion 4 via the panel 5.

An adhesive material 9 is arranged between the back surface 6b of the panel 5 and the support portion 7a, and the panel 5 is fixed to the support portion 7a by the adhesive material 9. The adhesive material 9 of the present embodiment is a double-sided tape but not limited to this, and any material can be used as long as the panel 5 can be fixed to the support portion 7a by the material. In the present embodiment, the support portion 7a supports the panel 5, but the present invention is not limited to this, and the support portion 7a may support the display portion 4. It is sufficient that the support portion 7a supports at least one of the display portion 4 and the panel 5.

The rear frame 8 contacts the front frame 7. The rear frame 8 is arranged to be arranged at the back surface 4b side of the display portion 4 and be opposite to the display unit 2. The rear frame 8 is arranged substantially in parallel to the edge (end surface) of the front frame 7.

The rear frame 8 is formed, for example, at a thickness of 0.5 mm, and is removably attached to the front frame 7 by snap-fitting etc. In the embodiment, the rear frame 8 is removably attached to the front frame 7, but the present invention is not limited to this.

The rear frame 8 has a first rear frame 10 and a second rear frame 11. The first rear frame 10 has a surface 10a, a back surface 10b, a first side surface 10c, and a second side surface 10d. The surface 10a of the first rear frame 10 is a surface formed at the back surface 4b side of the display portion 4. The back surface 10b is a surface formed to be opposite to and substantially in parallel to the surface 10a. The first side surface 10c is a surface contacting the front frame 7, and the second side surface 10d is a surface contacting the second rear frame 11.

The second rear frame 11 has a surface 11a, a back surface 11b, a first side surface 11c, and a second side surface 11d. The surface 11a of the second rear frame 11 is a surface formed at the back surface 4b side of the display portion 4. The back surface 11b is a surface formed to be opposite to and substantially in parallel to the surface 11a. The first side surface 11c is a surface contacting the front frame 7, and the second side surface 11d is a surface contacting the first rear frame 10.

The mounting substrate 12 is arranged on the surface 10a of the first rear frame 10, and the batteries 13 are arranged on the surface 11a of the second rear frame 11. The surface 10a of the first rear frame 10 has a plane area larger than a plane area occupied by the mounting substrate 12. The surface 11a of the second rear frame 11 has a plane area larger than a plane area occupied by the batteries 13.

The first rear frame 10 has a rectangular shape, and is arranged such that the first side surface 10c contacts three surfaces of the front frame 7. The first rear frame 10 is arranged to contact two corners K of the front frame 7. The second side surface 10d of the first rear frame 10 contacts the second side surface 11d of the second rear frame 11.

In the embodiment, the first rear frame 10 is arranged to contact the two corners K of the front frame 7, but the present invention is not limited to this. Stress occurring in the mounting substrate 12 when the portable information apparatus 1 is bent is easy to arise in a central portion of the first opening H1 or the second opening H2. In this case, stress is difficult to arise at the side of the mounting substrate 12 at which the front frame 7 is arranged since the front frame 7 has rigidity. Thus, it is desirable that the mounting substrate 12 be arranged at the side at which the front frame 7 is formed, that is, at the position distant from the central portion or the edge side of the front frame 7. Further, the mounting substrate 12 may be arranged to be substantially in parallel to a bent axial direction.

A material having plasticity is used as a material of the first rear frame 10 and the second rear frame 11. The first rear frame 10 is formed to have rigidity higher than the second rear frame 11.

For example, the first rear frame 10 is formed of a metallic material such as metal including aluminum (Al) or magnesium (Mg) or an alloy. For example, the second rear frame 11 is formed of a resin material such as elastomer. Using this material, the second side surface 10d of the first rear frame 10 and the second side surface 11d of the second rear frame 11 can be fixed by thermal welding or insert molding, for example. In the embodiment, the first rear frame 10 is formed using a metallic material, but the present invention is not limited to this, and the first rear frame 10 may be formed using a resin material having rigidity larger than the second rear frame 11.

As described above, the rear frame 8 is formed such that the first rear frame 10 has rigidity larger than the second rear frame 11. It is because stress applied to the mounting substrate 12 arranged on the surface 10a of the first rear frame 10 is reduced when the portable information apparatus 1 is bent.

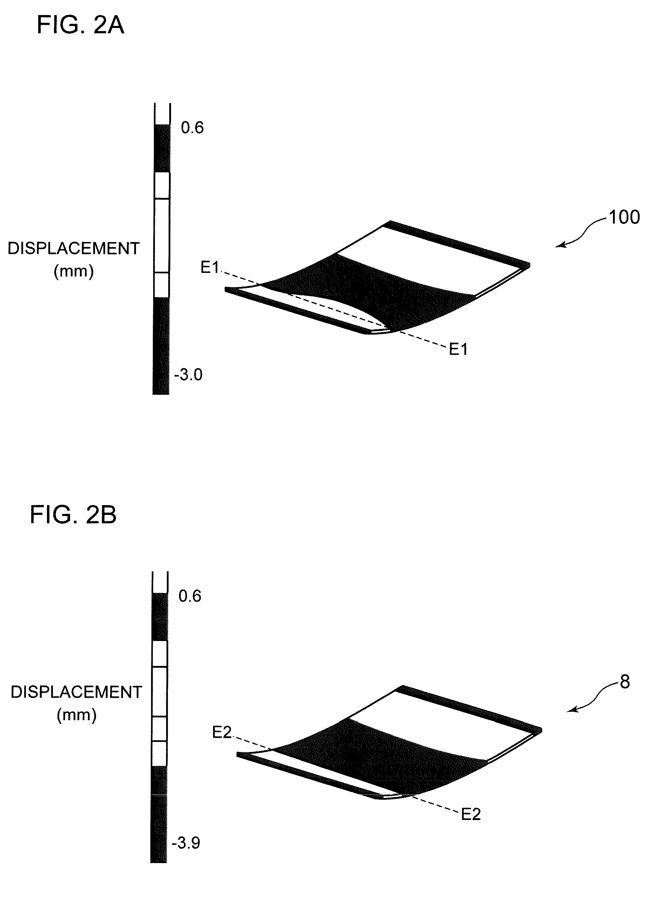

Figs. 2A and 2B are diagrams illustrating a displacement distribution calculated by structural analysis when the rear frame is bent. Fig. 2A illustrates a displacement distribution when a rear frame 100 of a comparative example, that is, the whole is made of the same material, and Fig. 2B illustrates a displacement distribution of the rear frame 8 according to the embodiment. A position at which a displacement distribution comparison is performed is a position at which the first rear frame 10 and the second rear frame 11 of the above-described embodiment are connected, that is, a position along line E1-E1 in Fig. 2A and a position along line E2-E2 in Fig. 2B. As a result, a maximum displace amount was 3.0 mm in the comparative example of Fig. 2A, whereas a maximum displace amount was 3.9 mm in the present embodiment of Fig. 2B. It can be understood that the rear frame 8 according to the present embodiment is easy to be deformed and is bending-input more easily than the rear frame 100 of the comparative example. It can be understood that the displacement amount of the rear frame 8 according to the present embodiment is about 30% larger than the displacement amount of the rear frame 100 of the comparative example.

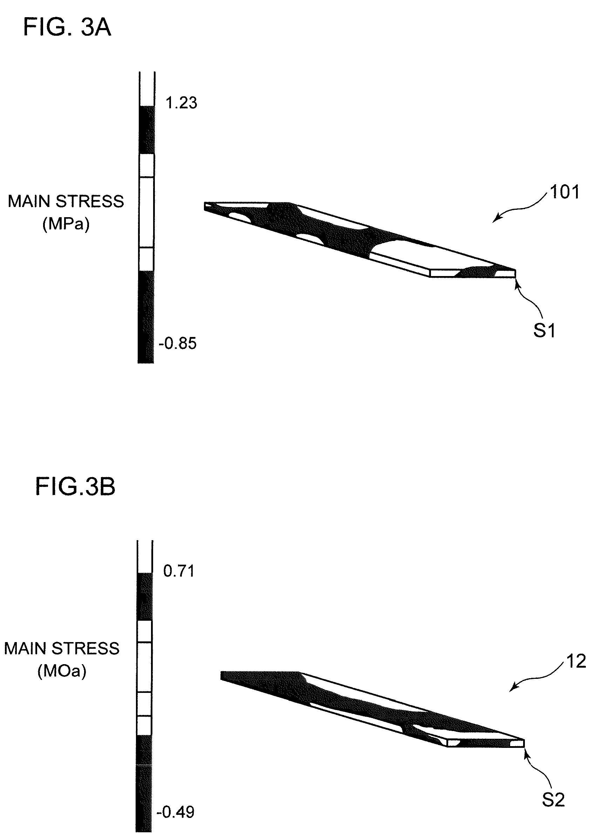

Figs. 3A and 3B illustrate stress distributions of the mounting substrate calculated by structural analysis when the rear frame is bent. Fig. 3A illustrates a stress distribution of a mounting substrate 101 when a rear frame 100 of a comparative example is used, and Fig. 3B illustrates a stress distribution of the mounting substrate 12 when the rear frame 8 according to the present embodiment is used. When a maximum stress occurring portion in Fig. 3A is assumed to be S1, and a maximum stress occurring portion in Fig. 3B is assumed to be S2, stress of 1.23 MPa arises in the maximum stress occurring portion S1, and stress of 0.71 MPa arises in the maximum stress occurring portion S2. It can be understood from the stress values that stress to occur can be reduced by about 42% in the structure of the present embodiment.

As can be understood from the results of Figs. 3A and 3B, when the rear frame 100 of the comparative example is used, since the entire rear frame 100 is deformed, the deformation of the mounting substrate arranged in the rear frame 100 is large. However, in the rear frame 8 according to the embodiment, since the first rear frame 10 is formed to have rigidity larger than the second rear frame 11, the deformation amount of the second rear frame 11 increases, and the deformation amount of the first rear frame 10 in which the mounting substrate 12 is arranged decreases. It can be understood that due to the difference in the deformation amount, the deformation amount of the mounting substrate 12 arranged in the first rear frame 10 is decreased, and thus stress to occur is decreased. In the rear frame 8 according to the embodiment, a load applied to the mounting substrate is smaller than in the rear frame 100 of the comparative example, and a breakage at the time of bending input can be suppressed.

In the embodiment, the mounting substrate 12 and the batteries 13 are arranged in the housing 3, and are fixed to the rear frame 8 through a double-sided tape serving as the adhesive material 14. However, the present invention is not limited to this, and any method capable of fixing the mounting substrate 12 and the batteries 13 to the rear frame 8 can be used.

The mounting substrate 12 is electrically connected with the display unit 2 and the batteries 13. In the mounting substrate 12, information processing is performed when an image or a video is projected by the display unit 2, and an operation is performed. In the mounting substrate 12, process of turning on or off a power source is performed as well. In order to reduce the thickness of the mounting substrate 12 in the thickness direction of the housing 3, a flexible substrate is used as the mounting substrate 12.

A plurality of batteries 13 are arranged to be substantially in parallel to the mounting substrate 12 and electrically connected with the mounting substrate 12 in series or in parallel. The batteries 13 are arranged to have a thickness smaller than the thickness of the mounting substrate 12 in the thickness direction of the housing 3, but the present invention is not limited to this.

Generally, the housing of the batteries 13 has strength larger than the mounting substrate 12. Thus, the batteries 13 are unlikely to be broken although the battery 13 is arranged on the second rear frame 11 having low rigidity and the large deformation amount.

As described above, in the portable information apparatus of the embodiment, the first rear frame 10 of the rear frame 8 is made using a material having rigidity larger than the second rear frame 11, and thus stress occurring in the mounting substrate 12 can be reduced.

When the entire rear frame is made using a member having high rigidity such as metal, the rigidity can be secured, but a load necessary for bending is large, and it is inappropriate to perform the bending input to the housing 3. On the other hand, when the entire rear frame is made using a member having low rigidity such as resin, a load necessary for bending is small, but the mounting substrate is also likely to be deformed and damaged when used. In this regard, in the embodiment, the first rear frame 10 of the rear frame 8 is made using a member having rigidity larger than the second rear frame 11, and thus it is possible to prevent a breakage while performing the bending input.

In the embodiment, the position at which the first rear frame 10 is connected with the second rear frame 11 is the position between the mounting substrate 12 and the batteries 13, but the present invention is not limited to this, and when the first rear frame 10 is made using a material having rigidity larger than the second rear frame 11, stress occurring in the mounting substrate 12 can be reduced.

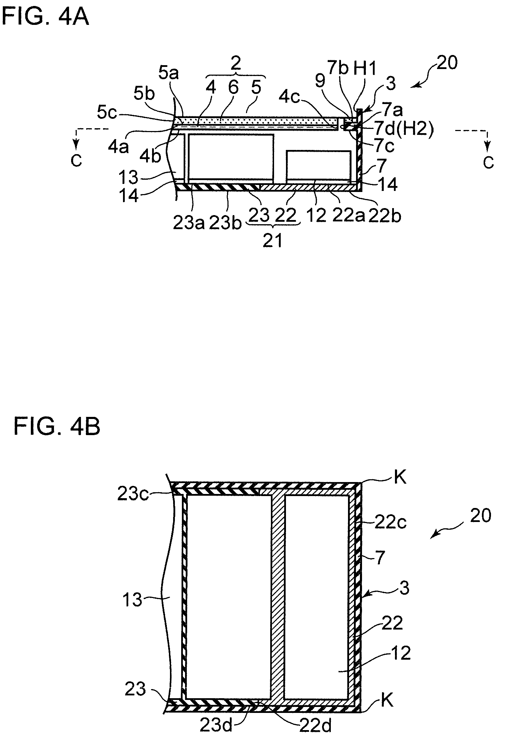

Figs. 4A and 4B illustrate a portable information apparatus according to another embodiment. Fig. 4A is a cross-sectional view, and Fig. 4B is a top view taken along line taken along line C-C of Fig. 4A. A rear frame 21 of a portable information apparatus 20 includes a first rear frame 22 and a second rear frame 23, and the first rear frame 22 is formed to have an area in which the first rear frame 22 can be connected with the batteries 13.

The first rear frame 22 has a surface 22a, a back surface 22b, a first side surface 22c, and a second side surface 22d. The surface 22a of the first rear frame 22 is a surface formed at the back surface 4b side of the display portion 4. The back surface 22b is a surface formed to oppose to and substantially in parallel to the surface 22a. The first side surface 22c is a surface contacting the front frame 7, and the second side surface 22d is a surface contacting the second rear frame 23.

The second rear frame 23 has a surface 23a, a back surface 23b, a first side surface 23c, and a second side surface 23d. The surface 23a of the second rear frame 23 is a surface formed at the back surface 4b side of the display portion 4. The back surface 23b is a surface formed to oppose to and substantially in parallel to the surface 23a. The first side surface 23c is a surface contacting the front frame 7, and the second side surface 23d is a surface contacting the first rear frame 22.

The mounting substrate 12 and a part of the battery 13 are arranged on the surface 22a of the first rear frame 22. The batteries 13 are arranged on the surface 23a of the second rear frame 23. The surface 22a of the first rear frame 22 is formed to have a plane area larger than a plane area occupied by the mounting substrate 12.

The first rear frame 22 has a rectangular shape, and is arranged such that the first side surface 22c contacts three surfaces of the front frame 7. The first rear frame 22 is arranged to contact two corners K of the front frame 7. The second side surface 22d of the first rear frame 22 contacts the second side surface 23d of the second rear frame 23.

In the embodiment, the first rear frame 22 is arranged to contact the two corners K of the front frame 7, but the present invention is not limited to this. In the above-described embodiment, since the first rear frame 22 is made using a material having rigidity larger than the second rear frame 23, stress occurring in the mounting substrate 12 can be reduced.

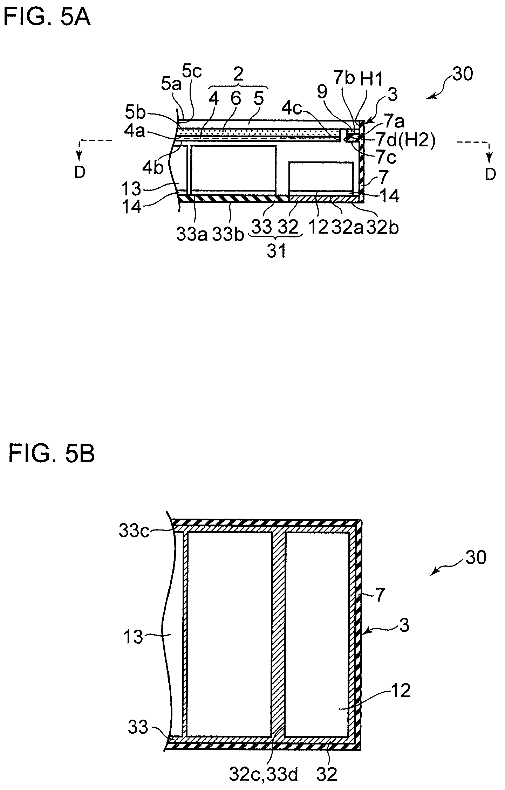

Further another embodiment will be described with reference to Figs. 5A and 5B. Fig. 5A is a cross-sectional view, Fig. 5B is a top view taken along line taken along line D-D of Fig. 5A. A rear frame 31 of a portable information apparatus 30 includes a first rear frame 32 and a second rear frame 33. The rear frame 31 is formed such that an area of the first rear frame 22 is the same as an area occupied by a mounting substrate 13. The side surface of the first rear frame 32 is arranged to surround the second rear frame 33.

The first rear frame 32 has a rectangular shape, and has a surface 32a, a back surface 32b, and a side surface 32c. The surface 32a of the first rear frame 32 is a surface formed at a side of the back surface 4b of the display portion 4. The back surface 32b is a surface formed to oppose to and substantially in parallel to the surface 32a. The side surface 32c is a surface contacting the second rear frame 23.

The second rear frame 33 has a surface 33a, a back surface 33b, a first side surface 33c, and a second side surface 33d. The surface 33a of the second rear frame 33 is a surface formed at a side of the back surface 4b of the display portion 4. The back surface 33b is a surface formed to oppose to and substantially in parallel to the surface 33a. The first side surface 33c is a surface contacting the edge end of the front frame 7, and the second side surface 33d is a surface contacting the edge end of the side surface 32c of the first rear frame 32.

The mounting substrate 12 is arranged on the surface 32a of the first rear frame 32, and the batteries 13 are arranged on the surface 33a of the second rear frame 33. The surface 32a of the first rear frame 32 is formed to have the same area as an area of the mounting substrate 12.

In the above-described embodiment, since the first rear frame 32 is made using a material having rigidity larger than the second rear frame 33, stress occurring in the mounting substrate 12 can be reduced.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### DESCRIPTION OF REFERENCE SIGNS

- 1, 20, 30: Portable information apparatus
- 2: Display unit
- 3: Housing
- 4: Display portion
- 5: Panel
- 4a, 5a: Display surface
- 4b, 5b, 7c, 10b, 11b, 22b, 23b, 32b, 33b: Back surface
- 4c, 5c, 7d, 32c: Side surface
- 6: Light transmissive member
- 7: Front frame
- 7a: Support portion
- 7b: Panel support surface
- 8, 21, 31, 100: Rear frame
- 9: Adhesive material
- 10, 22, 32: First rear frame
- 10a, 11a, 22a, 23a, 32a, 33a: Surface
- 10c, 11c, 22c, 23c, 33c: First side surface
- 10d, 11d, 22d, 23d, 33d: Second side surface
- 11, 23, 33: Second rear frame
- 12, 101: Mounting substrate
- 13: Battery
- H1: First opening
- H2: Second opening
- K: Corner
- S1, S2: Maximum stress occurring portion

## Claims

1. A portable information apparatus, comprising:
a display unit which includes a display portion having a display surface and a back surface formed at a side opposite to the display surface, and a panel arranged on the display surface of the display portion and having a back surface formed at a side of the display surface of the display portion, a display surface formed at a side opposite to the back surface and a side surface contacting the back surface and the display surface;
a housing which has a front frame formed to surround the side surface of the panel and provided with a support portion to support the display unit and a rear frame, the rear frame being arranged at a side of the back surface of the display portion to contact the front frame and to oppose to the display unit; and
a mounting substrate arranged in the housing,
wherein the rear frame has a first rear frame and a second rear frame, the first rear frame has rigidity larger than the second rear frame, and the mounting substrate is provided on the first rear frame.

2. The portable information apparatus according to claim 1, wherein the first rear frame is formed to has an area which is the same as or larger than an area contacting the mounting substrate.

3. The portable information apparatus according to claim 1, wherein the first rear frame is arranged at a side of the front frame from a center side of an opening surrounded by the front frame.

4. The portable information apparatus according to claim 2, wherein the first rear frame is arranged at a side of the front frame from a center side of an opening surrounded by the front frame.

5. The portable information apparatus according to claim 1, wherein the first rear frame is formed of at least one of metal or resin.

6. The portable information apparatus according to claim 2, wherein the first rear frame is formed of at least one of metal or resin.

7. The portable information apparatus according to claim 3, wherein the first rear frame is formed of at least one of metal or resin.

8. The portable information apparatus according to claim 1, further comprising a battery which is provided on the second rear frame, wherein the strength of a housing of the battery is larger than the strength of the mounting substrate.

9. The portable information apparatus according to claim 2, further comprising a battery which is provided on the second rear frame, wherein the strength of a housing of the battery is larger than the strength of the mounting substrate.

10. The portable information apparatus according to claim 1, wherein an adhesive material having light permeability is provided between the display portion and the panel.

11. The portable information apparatus according to claim 1, wherein the support portion supporting the display unit is formed to protrude inward from the front frame, and an adhesive material is provided between the support portion and the panel.

## Amended claims

### Amended claims under Art. 19.1 PCT

1. A portable information apparatus, comprising:
a display unit which includes a display portion having a display surface and a back surface formed at a side opposite to the display surface, and a panel arranged on the display surface of the display portion and having a back surface formed at a side of the display surface of the display portion, a display surface formed at a side opposite to the back surface and a side surface contacting the back surface and the display surface;
a housing which has a front frame formed to surround the side surface of the panel and provided with a support portion to support the display unit and a rear frame, the rear frame being arranged at a side of the back surface of the display portion to contact the front frame and to oppose to the display unit; and
a mounting substrate arranged in the housing,
wherein the rear frame has a first rear frame and a second rear frame, the first rear frame has rigidity larger than the second rear frame, and the mounting substrate is provided on the first rear frame.

2. The portable information apparatus according to claim 1, wherein the first rear frame is formed to has an area which is the same as or larger than an area contacting the mounting substrate.

3. The portable information apparatus according to claim 1, wherein the first rear frame is arranged at a side of the front frame from a center side of an opening surrounded by the front frame.

4. The portable information apparatus according to claim 2, wherein the first rear frame is arranged at a side of the front frame from a center side of an opening surrounded by the front frame.

5. The portable information apparatus according to claim 1, wherein the first rear frame is formed of at least one of metal or resin.

6. The portable information apparatus according to claim 2, wherein the first rear frame is formed of at least one of metal or resin.

7. The portable information apparatus according to claim 3, wherein the first rear frame is formed of at least one of metal or resin.

8. The portable information apparatus according to claim 1, further comprising a battery which is provided on the second rear frame, wherein the strength of a housing of the battery is larger than the strength of the mounting substrate.

9. The portable information apparatus according to claim 2, further comprising a battery which is provided on the second rear frame, wherein the strength of a housing of the battery is larger than the strength of the mounting substrate.

10. The portable information apparatus according to claim 1, wherein an adhesive material having light permeability is provided between the display portion and the panel.

11. The portable information apparatus according to claim 1, wherein the support portion supporting the display unit is formed to protrude inward from the front frame, and an adhesive material is provided between the support portion and the panel.
